# DEMANDE DE BREVET EUROPEEN

(11) **EP 1 418 115 A1**
(43) Date de publication de la demande: **12.05.2004**
(21) Numéro de dépôt: 03292780.8
(22) Date de dépôt: 06.11.2003
(51) Int. Cl.: B62D 53/02

(54) **Véhicule léger de chantier, notamment véhicule à benne**

(30) Priorité: 07.11.2002 FR 0213921; 06.03.2003 FR 0302767
(71) Demandeur: Coeuret, Bernard, 14310 Villers Bocage (FR)
(72) Inventeur: Coeuret, Bernard, 14310 Villers Bocage (FR)
(74) Mandataire: Cabinet HERRBURGER

(57) **Abrégé**

Véhicule léger de chantier comprenant
- un châssis (1) avant équipé de roues motrices non directrices (6, 7), et portant le poste de conduite (1),
- un châssis arrière (3) équipé de roues motrices non directrices (8, 9), recevant la charge (4),
- une articulation (5) d'axe vertical ZZ entre le châssis avant (1) et le châssis arrière (3) constituant une articulation de direction,
- une articulation d'axe horizontal entre les deux châssis (1, 3),
- au moins un vérin de direction (14, 15) reliant les deux parties de l'articulation de direction (5) en laissant libre l'articulation horizontale (16) ainsi qu'un circuit hydraulique pour commander le vérin de direction.

## Description

### Domaine de l'invention

La présente invention concerne un véhicule léger de chantier, à quatre roues motrices, notamment à benne ou plate-forme de chargement.

### Etat de la technique

On connaît des petits véhicules de chantier composés d'une benne frontale, munie d'une roue avec un conducteur placé derrière la benne, au-dessus du moteur et de l'essieu arrière. L'essieu arrière est en général directeur.

Ce véhicule, relativement ancien, est utilisé sur les chantiers pour transporter des produits en vrac tels que du sable, du gravier ou des sacs. Toutefois, il est de moins en moins utilisé pour diverses raisons et en particulier parce que de nombreuses charges sont palettisées et ne peuvent être transportées par un tel véhicule.

La benne est de faible capacité et la stabilité du véhicule est relativement réduite sur des terrains accidentés. Enfin, sa motricité est faible et le véhicule risque facilement de s'embourber car il n'a que deux roues motrices.

### But, objet et avantages de l'invention

La présente invention a pour but de développer un véhicule léger de chantier, maniable, permettant de transporter des charges relativement importantes par rapport au poids et la taille du véhicule et qui s'adapte facilement à des terrains difficiles tant par leur irrégularité que par leur consistance, et qui puisse également s'utiliser comme petit véhicule de travaux urbains, pour les chantiers de voirie, d'entretien des espaces verts dans les municipalités et autres travaux divers.

### Exposé de l'invention

A cet effet, l'invention concerne un véhicule léger du type défini ci-dessus, caractérisé en ce qu'il comprend :
- un châssis avant équipé de roues non directrices, et portant le poste de conduite,
- un châssis arrière équipé de roues non directrices, recevant la charge,
- une articulation d'axe vertical entre le châssis avant et le châssis arrière constituant une articulation de direction,
- une articulation d'axe horizontal entre les deux châssis,
- au moins un vérin de direction reliant les deux parties de l'articulation de direction en laissant libre l'axe d'articulation horizontal ainsi qu'un circuit hydraulique pour commander le vérin de direction.

Ce petit véhicule offre l'avantage d'une très grande maniabilité grâce à son châssis articulé à la fois pour le braquage et à son articulation autour de l'axe horizontal, lui assurant une excellente tenue sur des terrains irréguliers.

Comme les quatre roues sont motrices, elles lui permettent de se dégager de situations délicates, en particulier pour le passage dans des terrains boueux ou de sable.

Ce véhicule léger, très polyvalent, peut servir au transport de charges, de matériel, ou recevoir un équipement porté pour le transporter dans des endroits difficiles d'accès, grâce à son faible encombrement et à sa maniabilité.

Suivant une autre caractéristique avantageuse, l'articulation de direction, d'axe vertical, se compose de deux parties à section verticale en forme de C, tournée l'une vers l'autre par leur ouverture et formant deux doubles chapes horizontales, les chapes homologues de chacune des parties de l'articulation de direction étant reliées par un axe respectif.

Cette réalisation de l'articulation de direction constitue une liaison particulièrement efficace et résistante, permettant par conséquent le transport de charges relativement importantes sur le châssis arrière équipé d'une benne, éventuellement basculante, ou d'une plate-forme recevant un équipement ou même d'un équipement spécial installé directement sur le châssis.

Cette articulation de direction est réalisée de façon particulièrement avantageuse par deux éléments d'articulation à couronne, notamment à billes ou à galets.

Suivant une autre caractéristique, l'articulation de direction reliant les deux châssis est reliée au châssis arrière par l'articulation d'axe horizontal.

Il est particulièrement intéressant de commander le braquage par deux vérins de direction de chaque côté de l'articulation de direction qui sont montés de manière symétrique par rapport au plan médian du véhicule et sont commandés en sens opposé.

Selon l'invention, les roues sont directement reliées à leur châssis respectif. Cela permet de supprimer les essieux avant et arrière donnant une garde au sol plus important au véhicule, l'allégeant, et lui offrant plus de souplesse de manoeuvre puisque l'articulation longitudinale permet la torsion du véhicule par pivotement de son châssis avant et de son châssis arrière l'un par rapport à l'autre autour de l'axe « horizontal ».

Suivant une autre caractéristique avantageuse, les roues sont munies chacune d'un moteur hydraulique alimenté de façon commandée par le circuit hydraulique.

Dans ces conditions, le circuit hydraulique des moteurs des roues comporte un différentiel hydraulique commandé par un organe de direction pour bloquer automatiquement le différentiel à partir d'un certain angle de braquage et le libérer en dessous de cet angle de braquage.

De façon avantageuse, les roues sont munies chacune d'un moteur hydraulique alimenté de façon commandée par le circuit hydraulique.

D'une manière particulière, le véhicule comporte des boîtiers cylindriques logeant les moteurs hydrauliques, ces boîtiers étant portés par des flasques fixés aux longerons du châssis.

L'installation des moteurs hydrauliques de roue dans des boîtiers cylindriques permet non seulement d'utiliser un même boîtier pour toutes les roues du véhicule mais aussi de protéger le moteur hydraulique contre les chocs et les projections de boue et d'eau. Ce montage des moteurs permet de régler la garde au sol du véhicule et d'avoir une garde au sol plus importante que si les moteurs hydrauliques étaient montés directement sur les longerons du châssis.

Enfin, la mise en place des moteurs, leur entretien et leur démontage sont extrêmement simples puisque les moteurs hydrauliques sont fixés à la couronne du côté extérieur du cylindre du boîtier.

De façon avantageuse, le différentiel hydraulique est constitué par une électrovanne reliant le circuit hydraulique des deux moteurs des roues avant et une électrovanne reliant le circuit hydraulique des deux moteurs des roues arrière.

Enfin, la commande du différentiel hydraulique est réalisée de manière particulièrement intéressante par un pressostat détectant la pression dans le circuit des vérins de direction pour commander le différentiel hydraulique.

### Dessins

La présente invention sera décrite ci-après de manière plus détaillée à l'aide d'un exemple de réalisation d'un petit véhicule représenté dans les dessins annexés dans lesquels :
- la figure 1 est une vue de côté du véhicule,
- la figure 2 est une vue de côté partiellement coupée au niveau de la cabine,
- la figure 3 est une vue de face du véhicule,
- la figure 4 est une vue de dessous du véhicule,
- la figure 5 est une vue de dessus du véhicule,
- la figure 6A est une vue en perspective du châssis avant du véhicule,
- la figure 6B est une vue en perspective du châssis arrière,
- la figure 7A est une vue de dessus d'un boîtier de moteur hydraulique de roue,
- la figure 7B est une vue de côté eu boiter de la figure 7A,
- la figure 8A est une vue de coté du châssis avant,
- la figure 8B est une vue de dessus du châssis avant,
- la figure 8C est une vue de face du châssis avant,
- la figure 9A est une vue de côté du châssis arrière,
- la figure 9B est une vue de dessus du châssis arrière.
- la figure 10 montre le schéma du circuit hydraulique d'entraînement des roues et de commande de direction,
- la figure 11 est une vue en perspective du véhicule, la benne étant en position de transport,
- la figure 12 est une vue analogue à celle de la figure 4 montrant la benne basculée en position de déchargement.

### Description d'un mode de réalisation

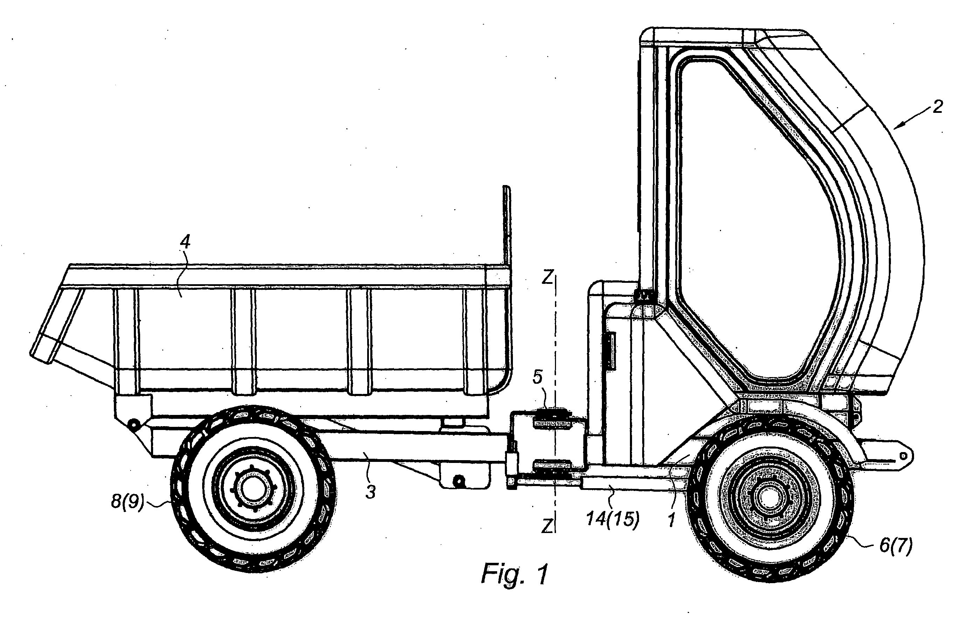

Selon les figures 1 à 5, un mode de réalisation d'un véhicule léger de chantier à quatre roues motrices se compose d'un châssis avant 1 portant un poste de conduite installé dans une cabine 2 et un châssis arrière 3 portant une charge, par exemple une benne 4 destinée à recevoir une charge.

Le châssis avant 1 est muni de roues avant 6, 7 et le châssis arrière de roues arrière 8, 9, ces roues étant directement reliées au châssis par l'intermédiaire d'un moteur hydraulique 10, 11, 12, 13. Ces roues ne sont pas associées à un essieu et aucune des roues n'est directrice.

L'articulation 5 d'axe vertical ZZ relie les deux châssis 1, 3 et constitue l'articulation de direction, le mouvement de braquage se faisant par le mouvement de pivotement d'un châssis 1, 3, par rapport à l'autre (3, 1). Pour cela, il est prévu un, et de préférence deux vérins de braquage 14, 15, agissant sur les deux parties de l'articulation de direction 5.

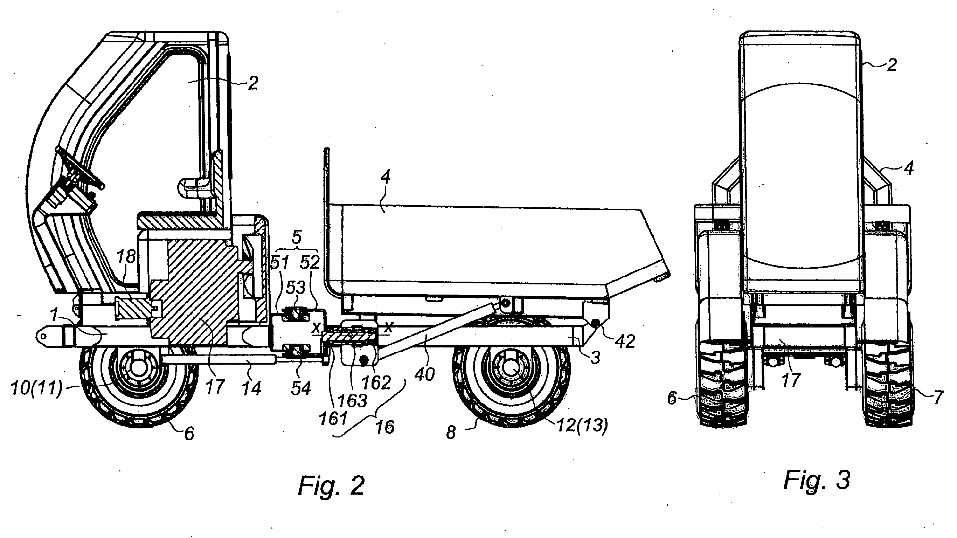

Cette articulation de direction 5 est complétée par une articulation 16 d'axe horizontal XX (figure 2) permettant un mouvement de torsion d'un châssis 1 par rapport à l'autre 3 et remplaçant par la mobilité ainsi assurée, la mobilité qui serait conférée par un essieu ou des roues montées sur des bras de suspension.

Les vérins de braquage 14, 15, sont installés dans des positions symétriques, de part et d'autre du plan médian vertical longitudinal du véhicule. Ces vérins 14, 15 fonctionnent en sens opposé et agissent sur les deux parties de l'articulation de direction 5 sans intervenir sur l'articulation d'axe horizontal 16.

Dans l'exemple représenté, comme articulation horizontale 16 est placée derrière l'articulation de direction 5, les vérins de braquage 14, 15 relient le châssis 1 à la partie de l'articulation de direction 5 non solidaire de ce châssis.

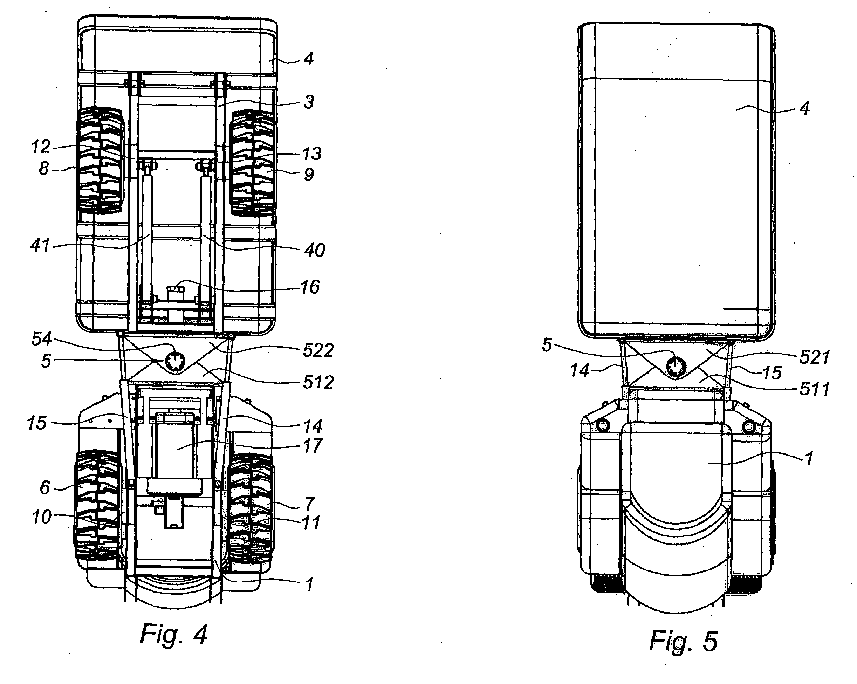

Selon les figures 2, 4, l'articulation de direction 5 se compose de deux parties 51, 52, ayant en section verticale une forme de C, constituant chaque fois une chape supérieure 511, 521 et une chape inférieure 512, 522 tournées l'une vers l'autre et associées chaque fois par une articulation 53, 54, constituée par une articulation de grande section, avec une couronne de billes ou de galets, ces deux articulations étant évidemment coaxiales suivant l'axe ZZ.

Les chapes de la partie avant 51 de l'articulation de direction sont reliées au châssis 1 alors que la partie arrière 52 de cette articulation 5 est reliée à la partie avant 161 de l'articulation horizontale 16 dont la partie arrière 162 est reliée au châssis arrière 3.

La benne 4 de ce mode de réalisation est basculante. Son mouvement est commandé par deux vérins 40, 41, qui la font basculer autour de l'axe 42 porté par le châssis arrière 3.

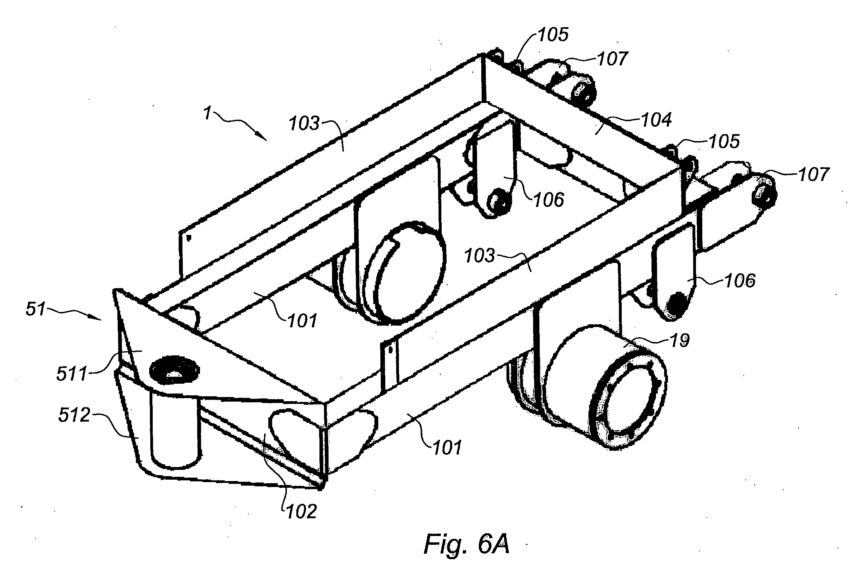

La figure 6A montre la structure du châssis avant 1 sans les équipements. Le châssis se compose de deux longerons 101 reliés par des traverses de longeron 102. Les longerons 101 et la traverse avant 102 portent un bandeau 103, 104 pour l'installation de la cabine 2 et l'équipement tel que le moteur 17, la pompe 18. La cabine 2 est montée de manière pivotante sur les pattes d'articulation 105 pour permettre l'accès au moteur et à la pompe par le dessus.

Les longerons portent également des attaches 106, 107 pour un équipement frontal non représenté.

A l'arrière, le châssis 1 porte la partie 51 de l'articulation avec ses deux chapes 511, 512.

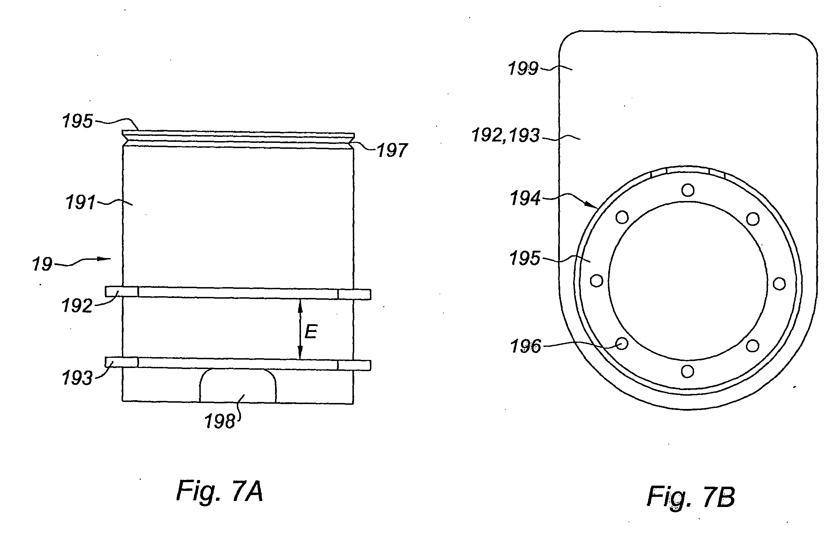

Les roues sont portées par des moteurs hydrauliques logés dans des boîtiers 119 représentés de manière plus détaillée aux figures 7A, 7B.

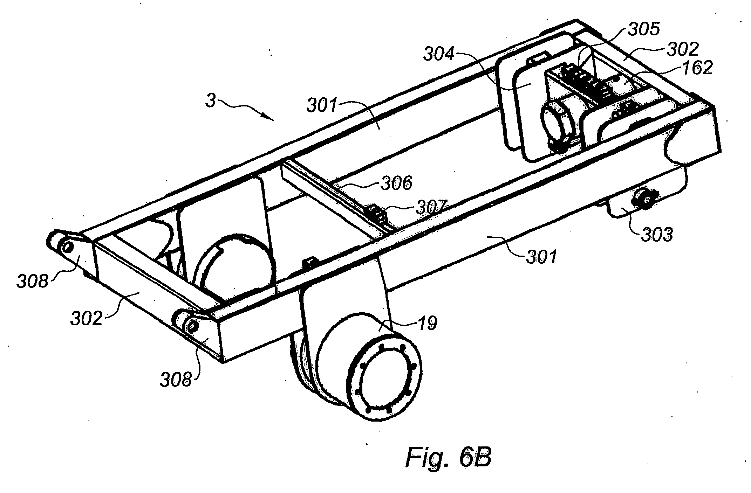

La figure 6B montre le châssis arrière 3 formé de longerons 301 reliés par des traverses 302 dont la traverse avant 302 porte la partie arrière 162 de l'articulation horizontale ainsi que des chapes 303 pour les vérins 40, 41 de la benne. Ces chapes 303 renforcent l'avant du châssis 3.

Au niveau de la partie arrière 162 de l'articulation horizontale, il est également prévu un appui 305 pour la benne. Une traverse intermédiaire 306 comporte également un appui de benne 307.

L'arrière du châssis 3 porte les chapes 308 d'articulation de la benne non représentée.

Les roues sont portées également, dans ce cas, par des boîtiers cylindriques 19 fixés aux longerons 301, ces boîtiers étant ceux représentés aux figures 7A, 7B.

Selon les figures 7A, 7B, un boîtier 19 recevant un moteur hydraulique de roue se compose d'un fût 191 cylindrique, muni de deux flasques 192, 193 de même forme, ayant un orifice 194 correspondant au périmètre extérieur du fût 191 pour recevoir le fût ; l'ensemble est de préférence assemblé par des soudures. Le côté extérieur du fût 191 est muni d'une couronne 195 percée de trous 196 pour fixer le moteur hydraulique de roue. La couronne 195 est fixée à l'avant du cylindre 191 par un cordon de soudure non représenté, réalisé dans la gorge 197 formée par la juxtaposition de la couronne 195 et du fût 191. A l'arrière, le fût 191 comporte une découpe cylindrique 198 pour le passage des flexibles remontant le long du longeron auquel sont fixés les deux flasques 192, 193.

L'écartement (E) des flasques 192, 193 correspond à l'épaisseur d'un longeron. La partie supérieure 199 des flasques 192, 193 permet non seulement la fixation à plat des flasques contre les côtés des longerons mais également de définir la garde au sol du véhicule par l'allongement plus ou moins important de cette partie 199.

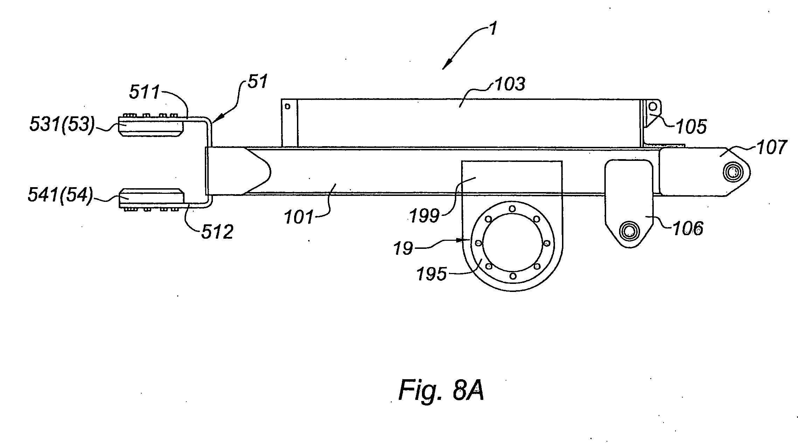

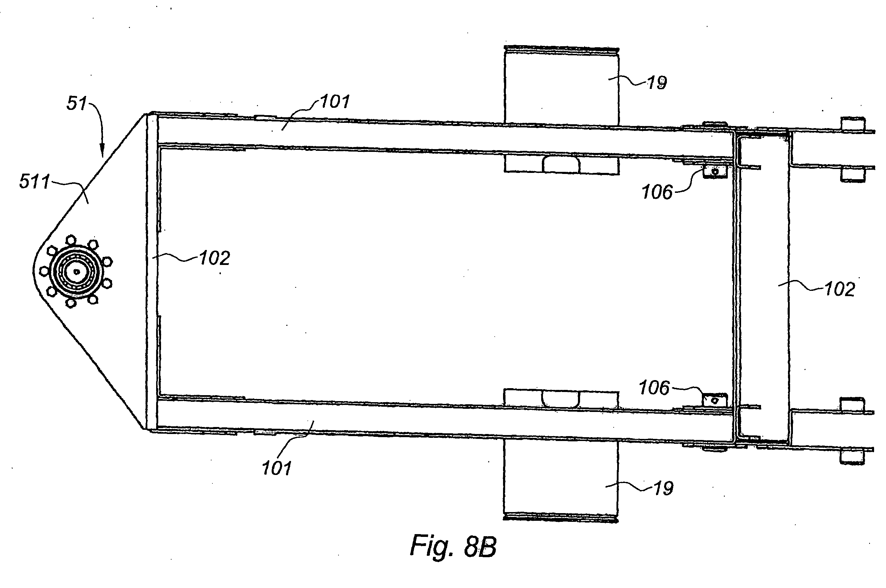

Les figures 8A, 8B montrent une vue de côté et de dessus du châssis avant 1, avec l'installation des boîtiers de roue sur les longerons. La figure 8B montre, en particulier, le passage 198 des flexibles destinés à rejoindre les longerons du châssis.

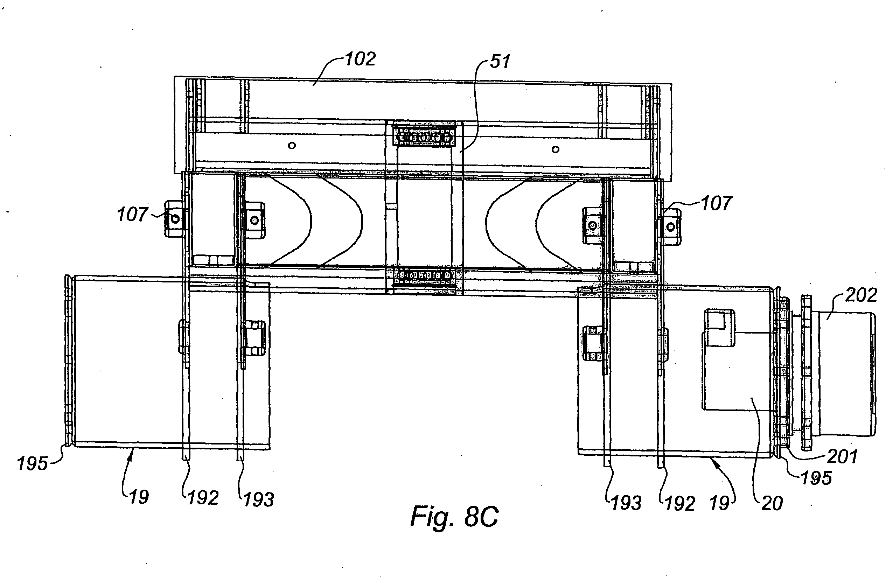

La figure 8C est une vue de face du châssis avant 1, montrant en particulier l'installation du moteur hydraulique 20 dont la bride 201 est fixée à la couronne 195. Le moteur hydraulique est équipé d'un support de roue 202.

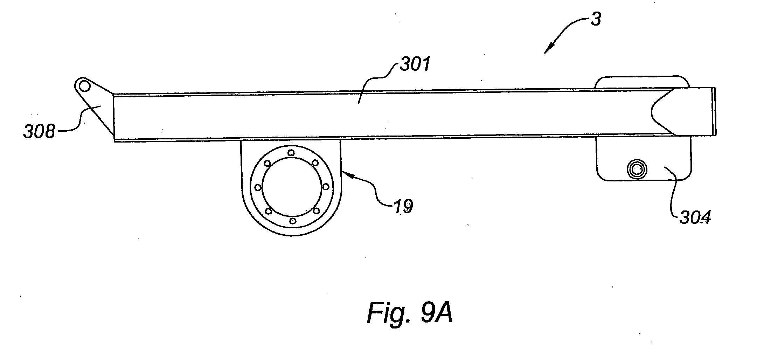

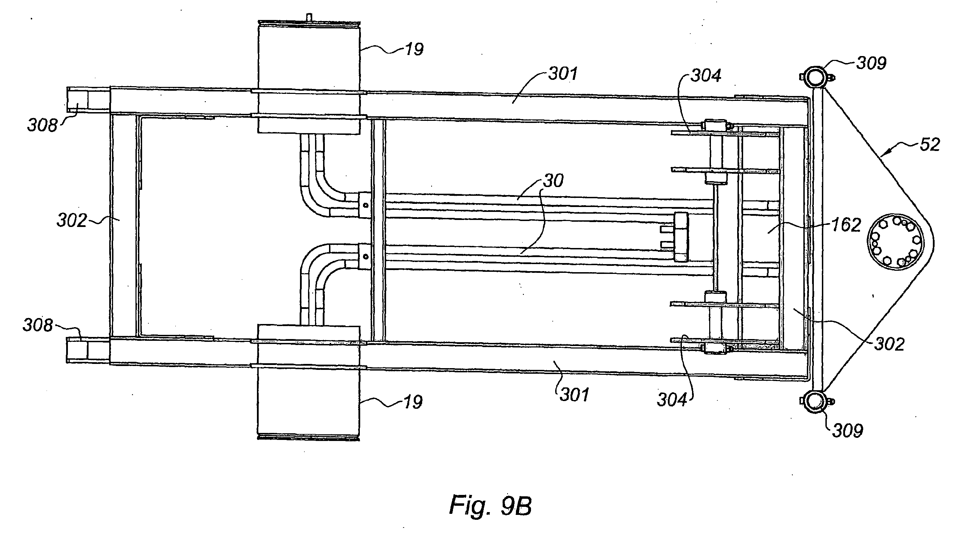

Les figures 9A, 9B montrent une vue de côté du châssis arrière 3 et de l'alimentation hydraulique des moteurs de roue par les conduites 300, reliés à l'avant pour rejoindre le groupe hydraulique du châssis avant. Cette vue de dessus montre également les attaches 309 de part et d'autre de la partie arrière de l'articulation 52 par les vérins de braquage.

L'entraînement du véhicule est assuré à partir d'un moteur thermique 17 entraînant une ou plusieurs pompes hydrauliques 18 alimentant le ou les circuits hydrauliques et en particulier le circuit hydraulique des moteurs 10-13 des roues, les vérins de braquage 14, 15 et les vérins de basculement de benne 40, 41.

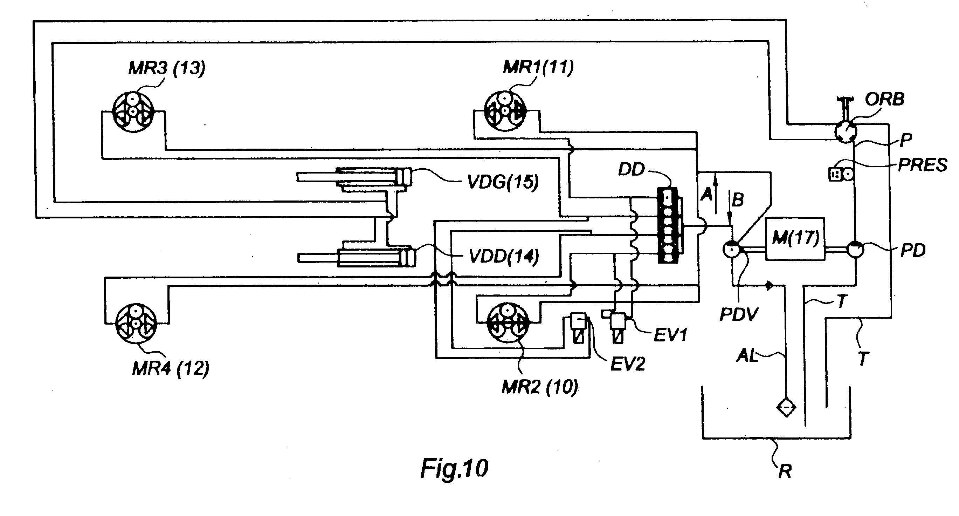

Le circuit hydraulique d'entraînement et de direction est représenté schématiquement à la figure 10 dans laquelle les différents moteurs hydrauliques de roues portent des références alphanumériques pour faciliter les explications de même que les vérins de direction.

Le circuit hydraulique de la figure 10 se compose de plusieurs sous-circuits, celui alimentant chacun des moteurs hydrauliques MR1, MR2, MR3, MR4 (en fait des motoréducteurs hydrauliques MR1-MR4) associés respectivement au côté avant gauche, au côté avant droit, au côté arrière gauche et au côté arrière droit ainsi qu'un circuit d'alimentation des vérins de direction VDG, VDD, associé respectivement au côté gauche et au côté droit.

Ces circuits sont alimentés en liquide hydraulique sous pression par une pompe de débit variable PDV entraînée par le moteur thermique M qui refoule le liquide hydraulique sous pression à travers un diviseur de débit DD à quatre sorties reliées respectivement à chacun des moteurs hydrauliques. Le diviseur de débit DD alimente séparément et indépendamment le circuit de chacun des moteurs hydrauliques MR1-MR4. Ces moteurs reçoivent dans ces conditions le même débit de liquide sous pression. Ces circuits sont également associés par un différentiel hydraulique constitué par deux électrovannes EV1, EV2. L'électrovanne EV1 est associée au circuit des moteurs hydrauliques avant MR1, MR2 ; l'électrovanne EV2 est associée au circuit des moteurs hydrauliques des roues arrière MR3, MR4.

En mettant en communication les circuits hydrauliques des deux moteurs MR1, MR2 ou/et MR3, MR4, on crée un effet de différentiel hydraulique car le liquide hydraulique sous pression fourni aux deux circuits hydrauliques, par exemple des moteurs MR1, MR2 se répartit à pression hydraulique constante entre les deux circuits, ce qui correspond au fonctionnement du différentiel. Le même fonctionnement se produit pour la partie du différentiel associée aux moteurs hydrauliques MR3, MR4 des roues arrière.

Le circuit hydraulique des vérins de direction gauche et droit VDG, VDD est un circuit unique puisque ces ceux vérins travaillent en opposition de phase, c'est-à-dire qu'ils sont reliés au circuit hydraulique de direction par des branchements croisés. Ce circuit reçoit le liquide hydraulique sous pression fourni par la pompe directionnelle PD à travers un dispositif de commande orbitrol associé au volant de direction. Ce dispositif orbitrol ORB met en communication le circuit des vérins de direction en envoyant du liquide hydraulique sous pression dans l'un ou l'autre branche du circuit pour commander le déplacement croisé des vérins dans le sens approprié.

En inversant l'alimentation des circuits, on modifie le sens de déplacement des vérins.

La pompe directionnelle PD est entraînée en permanence par le moteur thermique, aussi débite-t-elle à vide dans le réservoir lorsque le volant n'est pas tourné et que les vérins de direction sont bloqués dans leur position, les deux branches du circuit étant fermées à leur extrémité par l'orbitrol ORB.

Pour cette position de l'orbitrol, la conduite de refoulement de la pompe directionnelle PD est directement reliée au retour T vers le réservoir R. Dans ces conditions, la pression qui règne dans cette partie du circuit est pratiquement nulle par rapport à la pression extérieure.

Or, la conduite entre la sortie de refoulement de la pompe PD et l'entrée de l'orbitrol ORB est équipée d'un pressostat PRES qui détecte la pression qui y règne. Lorsque la pression est nulle, il fournit un signal de pression nul. Lorsque l'orbitrol est commandé, le liquide hydraulique refoulé par la pompe PD alimente l'une des branches du circuit de direction et se trouve donc à une certaine pression. Cette pression est détectée par le pressostat qui commande, par l'intermédiaire d'un circuit de commande électronique non représenté, la mise en oeuvre des électrovannes EV1, EV2 pour permettre le fonctionnement en différentiel des moteurs hydrauliques de roues ou bloquer ce fonctionnement, c'est-à-dire bloquer le différentiel.

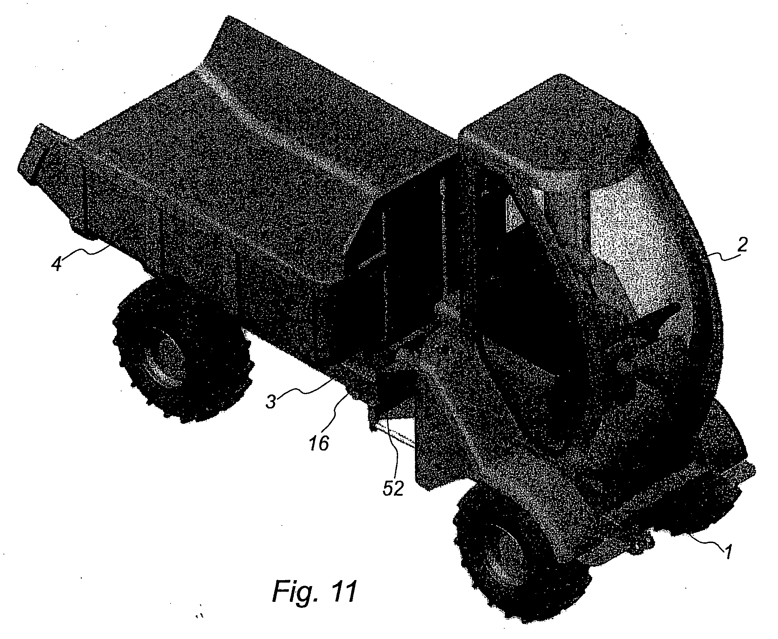

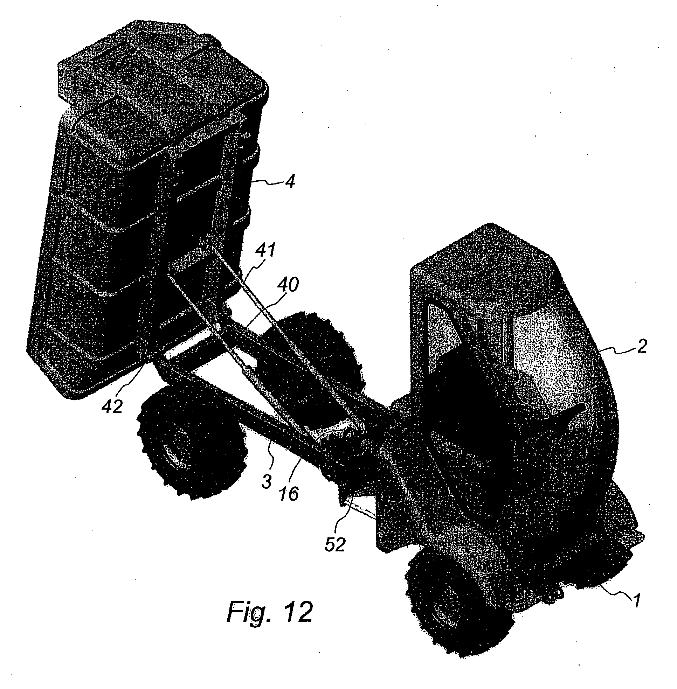

Les figures 11 et 12 donnent chacune une vue d'ensemble du véhicule léger selon l'invention, l'une avec la benne en position horizontale de chargement, et l'autre avec la benne relevée. Ces dernières vues laissent apparaître la structure du châssis arrière et le montage des moteurs hydrauliques de roues sur le châssis. Elles laissent également apparaître la partie avant du véhicule et en particulier les pattes d'accrochage 106, 107 d'un outil frontal ainsi que le détail du poste de conduite, non décrit de manière détaillée ici puisque n'intervenant pas directement dans la présente invention.

## Revendications

1. Véhicule léger de chantier à quatre roues motrices,
**caractérisé en ce qu'**il comprend :
- un châssis (1) avant équipé de roues motrices non directrices (6, 7), et portant le poste de conduite (1),
- un châssis arrière (3) équipé de roues motrices non directrices (8, 9), recevant la charge (4),
- une articulation (5) d'axe vertical ZZ entre le châssis avant (1) et le châssis arrière (3) constituant une articulation de direction,
- une articulation d'axe horizontal (16) entre les deux châssis (1, 3),
- au moins un vérin de direction (14, 15) reliant les deux parties (51, 52) de l'articulation de direction en laissant libre l'articulation horizontale (16) ainsi qu'un circuit hydraulique pour commander le vérin de direction (14, 15).

2. Véhicule léger de chantier selon la revendication 1,
**caractérisé en ce que**
l'articulation de direction (5), d'axe vertical ZZ, se compose de deux parties (51, 52) à section verticale en forme de C, tournée l'une vers l'autre par leur ouverture et formant deux doubles chapes horizontales (511, 512, 521, 522), les chapes homologues de chacune des parties de l'articulation de direction étant reliées par un moyen d'articulation respectif (53, 54).

3. Véhicule léger de chantier selon la revendication 2,
**caractérisé en ce que**
les deux moyens d'articulation (53, 54) sont des articulations à couronne, à billes ou à galets.

4. Véhicule léger de chantier selon l'une quelconque des revendications 1 et 2,
**caractérisé en ce que**
l'articulation de direction (5) reliant les deux châssis (1, 3) est reliée au châssis arrière (3) par l'articulation horizontale (16).

5. Véhicule léger de chantier selon la revendication 1,
**caractérisé par**
deux vérins de direction (14, 15) de chaque côté de l'articulation de direction (5) qui sont montés de manière symétrique par rapport au plan médian du véhicule et sont commandés en sens opposé.

6. Véhicule léger de chantier selon la revendication 1,
**caractérisé en ce que**
les roues (6 - 9) sont directement reliées à leur châssis respectif (1, 3).

7. Véhicule léger de chantier selon la revendication 1,
**caractérisé en ce que**
les roues sont munies chacune d'un moteur hydraulique (10 - 13) alimenté de façon commandée par le circuit hydraulique.

8. Véhicule léger de chantier selon les revendications 1 et 7,
**caractérisé en ce qu'**
il comporte des boîtiers cylindriques (19) logeant les moteurs hydrauliques (20), ces boîtiers étant portés par des flasques fixés aux longerons du châssis.

9. Véhicule léger selon la revendication 8,
**caractérisé en ce que**
le cylindre (191) formant le boîtier (19) d'un moteur de roue (20) est un cylindre d'axe horizontal fixé à deux flasques (192, 193) traversés par le cylindre (191) et écartés de la largeur (E) du longeron en se prolongeant vers le haut par une partie de fixation (199), le cylindre (191) étant terminé du côté extérieur par une couronne de bridage (195) du moteur hydraulique (20).

10. Véhicule léger de chantier selon la revendication 7,
**caractérisé en ce que**
le circuit hydraulique des moteurs des roues comporte un différentiel hydraulique (EV1, EV2) commandé par un organe de direction (ORB) pour bloquer automatiquement le différentiel à partir d'un certain angle de braquage et le libérer en dessous de cet angle de braquage.

11. Véhicule léger de chantier selon la revendication 10,
**caractérisé en ce que**
le différentiel hydraulique est constitué par une électrovanne (EV1) reliant le circuit hydraulique des deux moteurs des roues avant et une électrovanne (EV2) reliant le circuit hydraulique des deux moteurs des roues arrière.

12. Véhicule léger de chantier selon la revendication 10,
**caractérisé par**
un pressostat (PRES) intégré dans le circuit du ou des vérins de direction (14, 15, VDG, VDD) pour en détecter la pression et commander le différentiel hydraulique (EV1, EV2) en fonction de la pression ainsi détectée.
